# EUROPEAN PATENT APPLICATION

(11) **EP 4 564 305 A1**
(43) Date of publication of application: **04.06.2025**
(21) Application number: 22953126.4
(22) Date of filing: 28.07.2022
(51) Int. Cl.: G06T 19/00

(54) **IMAGE PROCESSING FOR GENERATING AUGMENTED REALITY IMAGE**

(71) Applicant: Rakuten Mobile, Inc., Tokyo 158-0094 (JP)
(72) Inventor: KUDO, Ryo, Tokyo 158-0094 (JP); CHENG, Kelvin Ka Sin, Tokyo 158-0094 (JP); INOUE, Madoka, Tokyo 158-0094 (JP); KATAGIRI, Takashi, Tokyo 158-0094 (JP)
(74) Representative: Betten & Resch
(86) International application number: PCT/JP2022/029132
(87) International publication number: WO 2024/024037

(57) **Abstract**

An augmented reality system generates a virtual viewpoint image from a designated position in a virtual world; determines whether or not, in the virtual viewpoint image, a simulated object in the virtual world that corresponds to a real object in a real world overlaps a virtual object that is present in the virtual world and is different from the simulated object; in a case where it is determined that the simulated object overlaps the virtual object in the virtual viewpoint image, generates an AR (augmented reality) object for an AR image that corresponds to the virtual object according to a positional relationship between the simulated object and the virtual object in the virtual viewpoint image; and displays the AR object in a transmissive display.

## Description

### TECHNICAL FIELD

The present disclosure relates to an image processing technique for generating augmented reality images.

### BACKGROUND ART

In recent years, augmented reality is widely developed, which is a technique for displaying an image (virtual image) generated by computer graphics, in an overlapped manner, on an image obtained by capturing a real world. For example, a technique for applying augmented reality to a real game in which a dynamic real object such as a radio-controlled car is operated is disclosed in Patent Literature Document 1. According to the document, as a result of applying a virtual performance effect to an image obtained by capturing a real game, the feeling of enjoyment of the real game can be enhanced.

### LISTING OF REFERENCES

### PATENT LITERATURE DOCUMENTS

Patent Literature Document 1: JP 2021-126454A

### SUMMARY OF THE INVENTION

### PROBLEMS TO BE SOLVED BY THE INVENTION

In the above document, augmented reality is realized by overlapping an image indicating a visual effect on an image obtained by capturing a real world. However, it is difficult to realize augmented reality of a type in which, while the real world is being viewed instead of an image obtained by capturing the real world, an image of an object in a virtual world is viewed at the same time. For example, it is possible that, as a result of displaying an image of a virtual world in a transmissive display through which a background can be seen, a real world and the virtual world can be viewed at the same time. However, the resultant sight may be an unnatural sight. For example, in a case where an image is simply displayed in a transmissive display, even in a case where an object in a virtual world is located behind any object in a real world, the object in the virtual world is seen as located in front of the object in the real world.

In view of such problems, an object of the present disclosure is to provide a technique for enabling appropriate viewing of objects in a virtual world while viewing a real world.

### SOLUTION TO THE PROBLEMS

In order to solve the above-described problems, an augmented reality system according to one aspect of the present disclosure includes one or more processors, and at least one of the one or more processors executes first generation processing, determination processing, second generation processing, and display processing. The first generation processing is processing for generating a virtual viewpoint image from a designated position in a virtual world. The determination processing is processing for determining whether or not, in the virtual viewpoint image, a simulated object in the virtual world that corresponds to a real object in a real world overlaps a virtual object that is present in the virtual world and is different from the simulated object. The second generation processing is processing for generating, in a case where it is determined that the simulated object overlaps the virtual object in the virtual viewpoint image, an AR (augmented reality) object for an AR image that corresponds to the virtual object according to a positional relationship between the simulated object and the virtual object in the virtual viewpoint image. The display processing is processing for displaying, in a transmissive display, an AR image in which the AR object is combined.

In order to solve the above-described problems, an image processing apparatus according to one aspect of the present disclosure includes one or more processors, and at least one of the one or more processors executes determination processing and generation processing. The determination processing is processing for determining, in a virtual viewpoint image from a designated position in a virtual world, whether or not a simulated object in the virtual world that corresponds to a real object in a real world overlaps a virtual object that is present in the virtual world and is different from the simulated object. The generation processing is processing for generating, in a case where it is determined that the simulated object overlaps the virtual object in the virtual viewpoint image, an AR (augmented reality) object for an AR image that corresponds to the virtual object according to a positional relationship between the simulated object and the virtual object in the virtual viewpoint image.

In order to solve the above-described problems, an image processing method according to one aspect of the present disclosure includes determining, in a virtual viewpoint image from a designated position in a virtual world, whether or not a simulated object in the virtual world that corresponds to a real object in a real world overlaps a virtual object that is present in the virtual world and is different from the simulated object; and generating, in a case where the simulated object overlaps the virtual object in the virtual viewpoint image, an AR (augmented reality) object for an AR image that corresponds to the virtual object according to a positional relationship between the simulated object and the virtual object in the virtual viewpoint image.

### ADVANTAGEOUS EFFECTS OF THE INVENTION

According to the technique of the present disclosure, it is possible to generate an augmented reality image in which objects in a virtual world are appropriately displayed.

### BRIEF DESCRIPTION OF THE DRAWINGS

Fig. 1 shows an exemplary configuration of an augmented reality system according to a first embodiment.
Fig. 2 shows an example of a sight of a user 1 viewed through an AR glass 10.
Fig. 3A shows an example of simply displaying an AR image related to a virtual vehicle C2.
Fig. 3B shows another example of simply displaying an AR image related to a virtual vehicle C2.
Fig. 3C shows an example of an ideal AR image when a real vehicle C1 is located in front and a virtual vehicle C2 is located behind.
Fig. 3D shows an example of a user viewpoint image when a real vehicle C1 is located in front and a virtual vehicle C2 is located behind.
Fig. 3E shows an example of an AR virtual vehicle C4 generated by an image processing apparatus 40.
Fig. 3F shows an example of an unnatural user sight.
Fig. 4 shows an exemplary configuration of the AR glass 10.
Fig. 5 shows an exemplary configuration of a remote monitoring apparatus 20.
Fig. 6 shows an exemplary configuration of a virtual space provision server 30.
Fig. 7 shows an exemplary configuration of the image processing apparatus 40.
Fig. 8 shows an example of a sequence diagram of communication between a real vehicle C1, the AR glass 10, the remote monitoring apparatus 20, the virtual space provision server 30, and the image processing apparatus 40 according to the first embodiment.
Fig. 9 shows an exemplary configuration of an augmented reality system according to a second embodiment.
Fig. 10 shows an exemplary configuration of an AR glass 11.
Fig. 11 shows an exemplary configuration of an image processing apparatus 41.
Fig. 12 is a diagram for describing a procedure for generating an adjusted user viewpoint image.
Fig. 13 shows an example of a sequence diagram of communication between a real vehicle C1, the AR glass 11, the remote monitoring apparatus 20, the virtual space provision server 30, and the image processing apparatus 41 according to the second embodiment.

### DESCRIPTION OF EMBODIMENTS

Hereinafter, embodiments of the present disclosure will be described in detail with reference to the accompanying drawings. Among the constituent elements disclosed below, those having the same functions are denoted by the same reference numerals, and descriptions thereof are omitted. Note that the embodiments disclosed below are one mode of the present disclosure, should be modified or changed as appropriate according to the apparatus configuration and various conditions, and are not limited to only the following embodiments. Moreover, not all combinations of features described in the present embodiments are essential for solving the above problems.

### First Embodiment

### Configuration of Augmented Reality System

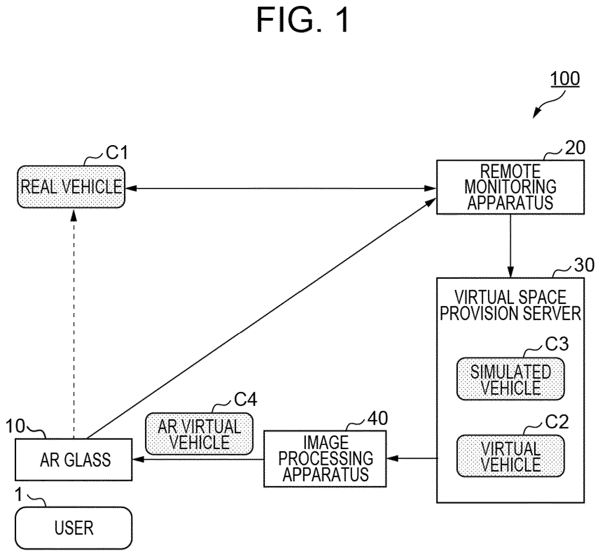

Fig. 1 shows an exemplary configuration of an augmented reality system 100 according to a first embodiment. The augmented reality system 100 is constituted by an augmented reality (AR) glass 10, a remote monitoring apparatus 20, a virtual space provision server 30, and an image processing apparatus 40.

The AR glass 10 is a transmissive display, and is worn by a user 1. The user 1 can see an image (hereinafter, AR image) displayed by the AR glass 10 while viewing a real world. In other words, a region of the real world that is not an image displayed by the AR glass 10 and a region of an image displayed by the AR glass 10 are included in the field of view of the user 1.

The virtual space provision server 30 is a server apparatus for providing a virtual space. The virtual space provision server 30 performs at least construction of a virtual space and generation of an image seen from a designated position in the constructed virtual space.

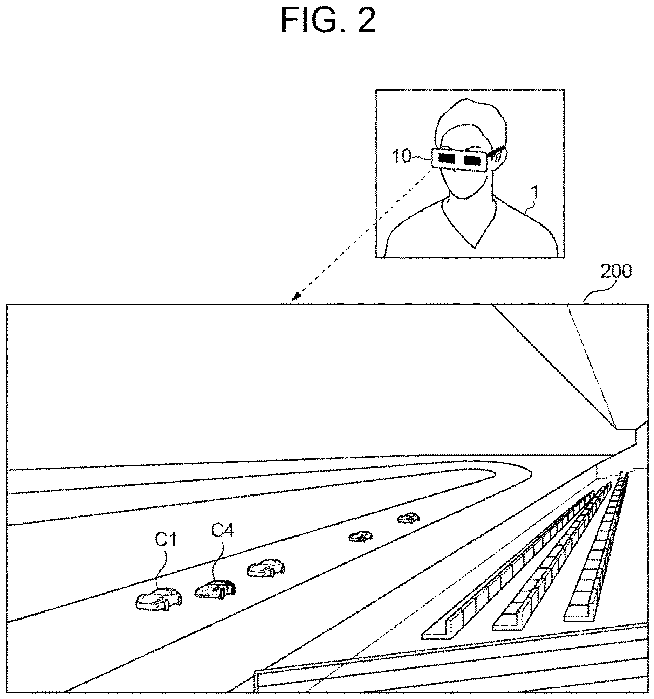

A real object C1 is an object that is present in a real world. In the present embodiment, it is assumed that the real object C1 is, for example, a vehicle in the real world (therefore, also denoted as a real vehicle C1) that runs on a circuit (see Fig. 2, which will be described later). It is assumed that the real vehicle C1 moves, and the position and posture are kept track of by the remote monitoring apparatus 20 using an existing technique. For example, the real vehicle C1 may acquire position information of the real vehicle C1 based on a signal of the global positioning system (GPS), a signal of an acceleration sensor, or the like, and transmit (send) the acquired position information to the remote monitoring apparatus 20. Alternatively, the remote monitoring apparatus 20 may receive a signal from the real vehicle C1 and derive the position of the real vehicle C1 from the signal.

Similarly, it is also assumed that the position and posture of the AR glass 10 are kept track of by the remote monitoring apparatus 20 using an existing technique.

The remote monitoring apparatus 20 functions as an apparatus for acquiring telemetry data of a predetermined object to be monitored in the real world. In the present embodiment, as described above, the remote monitoring apparatus 20 monitors the circuit and acquires the position information of the real vehicle C1 and the AR glass 10. Moreover, the remote monitoring apparatus 20 acquires (specifies) an identifier of the real vehicle C1, and transmits the position information and identifier of the real vehicle C1 to the virtual space provision server 30. Also, the remote monitoring apparatus 20 transmits the position information of the AR glass 10 to the virtual space provision server 30. Moreover, the remote monitoring apparatus 20 may acquire information regarding the direction from the position of the AR glass 10 to the position of the real vehicle C1, and transmits the acquired information to the virtual space provision server 30.

The virtual space provision server 30 generates an object in the virtual world that corresponds to the real object C1. The object may also be denoted as a simulated object C3. In the present embodiment, the simulated vehicle C3, which is a simulated object corresponding to the real vehicle C1, is generated based on the position information and identifier of the real vehicle C1 that are obtained from the remote monitoring apparatus 20, and the position and posture of the simulated vehicle C3 are adjusted. Accordingly, the simulated vehicle C3 can move in the virtual space in accordance with the movement of the real vehicle C1 in the real world (e.g., circuit).

Also, the virtual space provision server 30 generates an object (virtual object) in the virtual world different from the simulated object C3. For example, a virtual vehicle C2 that is different from the simulated object C3 may be generated as a virtual object, and the virtual vehicle C2 may be moved. Note that the virtual vehicle C2 may automatically move. For example, the virtual space provision server 30 may move the virtual vehicle C2 according to a past traveling record of the real vehicle C1 or another real vehicle. Alternatively, the virtual space provision server 30 may receive an operation of the simulated vehicle C3 from the user 1 or another user, as in the case of a game system, and the virtual space provision server 30 may move the virtual vehicle C2 according to the operation.

The virtual space provision server 30 specifies the position of the AR glass 10 in the virtual world (hereinafter, virtual position of the AR glass 10) based on the position information of the AR glass 10 that is obtained from the remote monitoring apparatus 20. Here, the user 1 wears the AR glass 10, and therefore the virtual position of the AR glass 10 can be regarded to be the same as the position of the user 1 in the virtual world (hereinafter, virtual position of the user 1). Also, the virtual space provision server 30 generates, by means of computer graphics, an image with the virtual position of the AR glass 10 being the viewpoint (hereinafter, user viewpoint image), as an image with the virtual position of the user 1 being the viewpoint, in the virtual world.

Note that the virtual space provision server 30 may generate a parallax image, that is, a user viewpoint image for left eye and a user viewpoint image for a right eye. For example, the size of the AR glass 10 is registered in the virtual space provision server 30 in advance, and as a result of deriving the virtual position of the AR glass 10 on a left eye side and the virtual position of the AR glass 10 on a right eye side, the user viewpoint images for left and right eyes may be generated. Note that the image processing apparatus 40 may also generate a parallax image based on a user viewpoint image.

Also, the user viewpoint image may also be generated using the direction from the position of the AR glass 10 to the position of the real vehicle C1 as the line of sight direction, along with the viewpoint.

The virtual space provision server 30 transmits the user viewpoint image to the image processing apparatus 40.

The image processing apparatus 40 generates an AR image to be displayed in the AR glass 10 from the user viewpoint image received from the virtual space provision server 30. For example, when a virtual vehicle C2 is present in a user viewpoint image, a virtual vehicle (hereinafter, AR virtual vehicle) C4 is generated, and the AR virtual vehicle C4 is transmitted to the AR glass 10. The AR virtual vehicle C4 is an image of a vehicle corresponding to the virtual vehicle C2 (AR object, which is a virtual object for AR image), which will be described in detail later.

The AR glass 10 displays the AR image received from the image processing apparatus 40 (e.g., AR virtual vehicle C4). The AR glass 10 is worn by the user 1, and the user 1 visually recognizes the AR image through the AR glass 10. That is, the display processing is equivalent to the AR glass 10 displaying the received AR virtual vehicle C4 in the field of view of the user 1 wearing the AR glass 10. Therefore, the user 1 can see the AR virtual vehicle C4 while viewing scenes in the real world.

Note that, in the present disclosure, the term "image" is understood as including a still image and/or a moving image.

Fig. 2 shows an example of a scene that the user 1 sees through the AR glass 10 (user sight). A user sight 200 is a user sight of the user 1 wearing the AR glass 10 on a circuit in the real world. The user 1 is observing an actual car race on the circuit, and can visually recognize the real vehicle C1 and the AR virtual vehicle C4 corresponding to the virtual vehicle C2 through the AR glass 10. The AR virtual vehicle C4 is not present in the actual car race, but is generated by the virtual space provision server 30 and the image processing apparatus 40, and is displayed in the AR glass 10. Accordingly, the user 1 can enjoy the car race in which the real vehicle C1 and the AR virtual vehicle C4 are included through the AR glass 10.

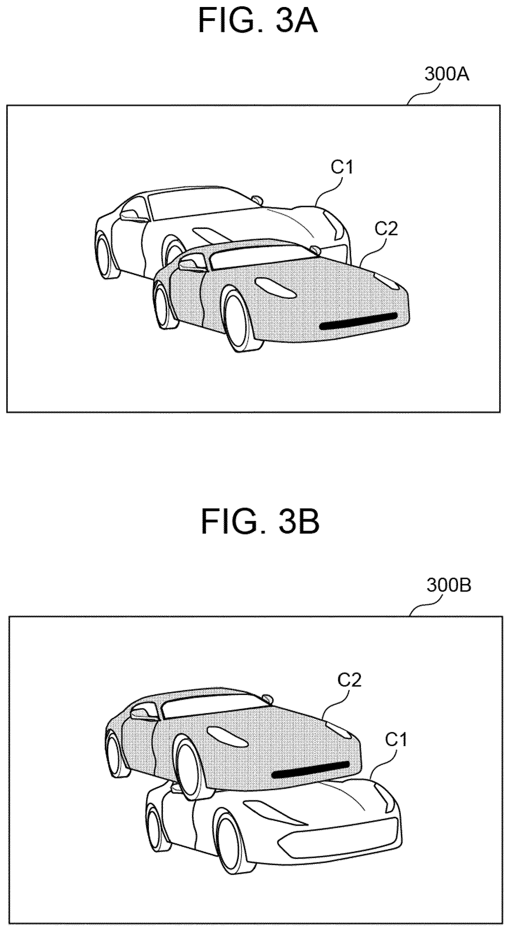

Next, the AR virtual vehicle C4 will be described with reference to Figs. 3A to 3E.

When the user 1 visually recognizes the real vehicle C1 and the AR virtual vehicle C4 through the AR glass 10, as shown in Fig. 2, the positional relationship (e.g., front and behind relationship) between the real vehicle C1 and the AR virtual vehicle C4 that is visually recognized by the user 1 changes depending on the movement of the real vehicle C1 and the movement of the virtual vehicle C2. For example, when the real vehicle C1 and the virtual vehicle C2 are depicted as being overlapped in the user viewpoint image due to being close to each other, a problem may arise depending on which of the real vehicle C1 and the virtual vehicle C2 is located in front.

In order to describe the AR virtual vehicle C4, an example of simply displaying the virtual vehicle C2, instead of the AR virtual vehicle C4, is shown in Figs. 3A and 3B. A user sight 300A in Fig. 3A is an example of a user sight when the virtual vehicle C2 is located in front and the real vehicle C1 is located behind. In the user sight 300A, the virtual vehicle C2 is displayed overlapping the real world including the real vehicle C1, and the user sight 300A is not an unnatural sight. This is because the positional relationship between the real vehicle C1 and the virtual vehicle C2 (front: virtual vehicle C2, behind: real vehicle C1) matches the overlapping relationship (front: virtual vehicle C2, behind: real vehicle C1).

A user sight 300B in Fig. 3B is an example of an AR image when the real vehicle C1 is located in front and the virtual vehicle C2 is located behind. The user sight 300B is an example in which the virtual vehicle C2 that is located behind the real vehicle C1 is displayed overlapping the real world including the real vehicle C1. The user sight 300B is an unnatural sight, because it cannot be recognized that the virtual vehicle C2 is located behind the real vehicle C1. This is because a transmissive display such as the AR glass 10 can only display an image so as to be in front of the scene, and the positional relationship between the real vehicle C1 and the virtual vehicle C2 (front: real vehicle C1, behind: virtual vehicle C2) does not match the overlapping relationship (front: virtual vehicle C2, behind: real vehicle C1).

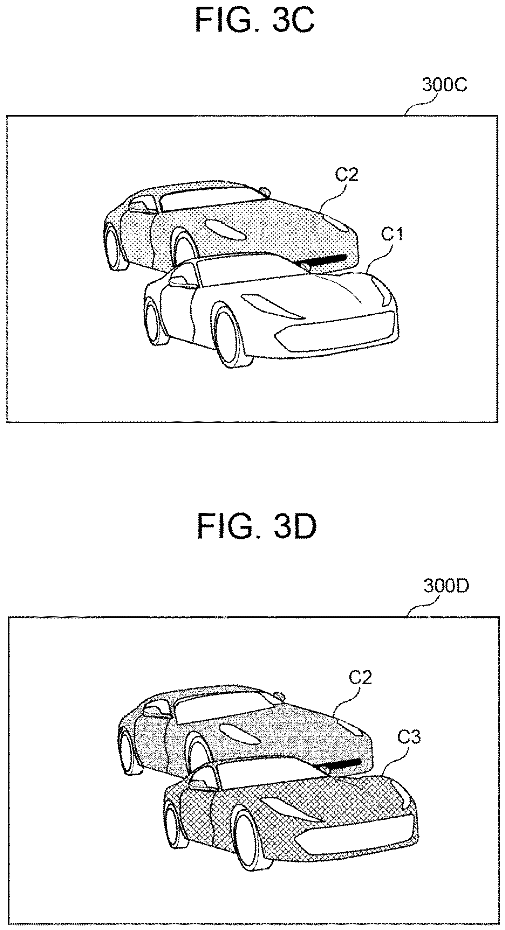

Fig. 3C shows an example of an ideal user sight when the real vehicle C1 is located in front and the virtual vehicle C2 is located behind. A user sight 300C in Fig. 3C is an example in which the vehicles are depicted such that the virtual vehicle C2 can be visually recognized to be located behind the real vehicle C1. In order to generate an AR image such as the user sight 300C, in the present embodiment, the image processing apparatus 40 generates the AR virtual vehicle C4 from a user viewpoint image generated by the virtual space provision server 30.

Fig. 3D shows an example of a user viewpoint image generated by the virtual space provision server 30 when the real vehicle C1 is located in front and the virtual vehicle C2 is located behind. As described above, the user viewpoint image is an image in which the virtual position of the AR glass 10 in the virtual world is the viewpoint. The user viewpoint image 300D in Fig. 3D is generated by computer graphics, and therefore the positional relationship between the vehicles is correctly depicted. That is, the user viewpoint image 300D is depicted such that the simulated vehicle C3 corresponding to the real vehicle C1 is located in front, and the virtual vehicle C2 is located behind.

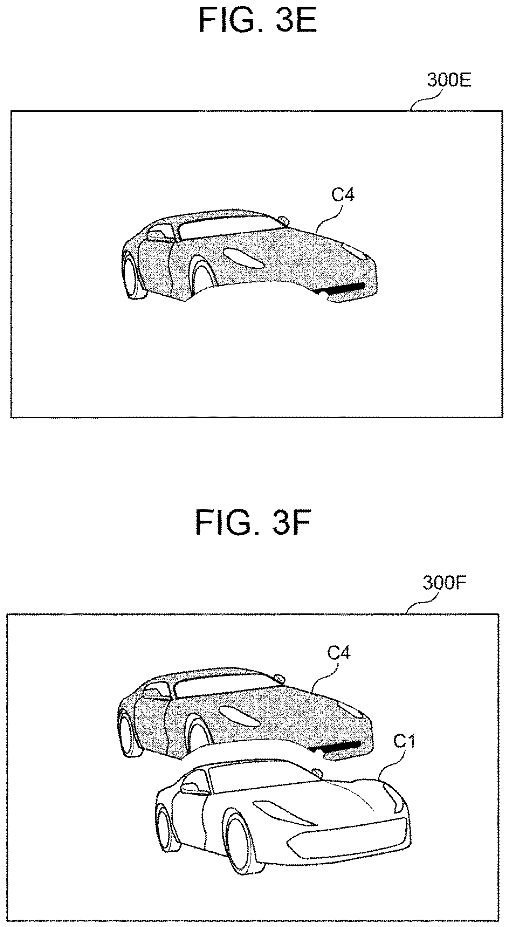

Fig. 3E shows an example of the AR virtual vehicle C4 generated by the image processing apparatus 40. An image 300E in Fig. 3E is an image in which the simulated vehicle C3 is deleted (in other words, made transparent) from the user viewpoint image 300D shown in Fig. 3D, which results in the AR virtual vehicle C4. The image 300E (that is, AR virtual vehicle C4) generated by the image processing apparatus 40 is transmitted to the AR glass 10, and is displayed in the AR glass 10. Accordingly, the user 1 wearing the AR glass 10 can see the real vehicle C1 and the AR virtual vehicle C4 without a sense of discomfort.

Exemplary configurations of apparatuses (system) that configure the augmented reality system 100 that realizes such processing, and an example of a specific processing procedure will be described below.

### Configuration of AR Glass 10

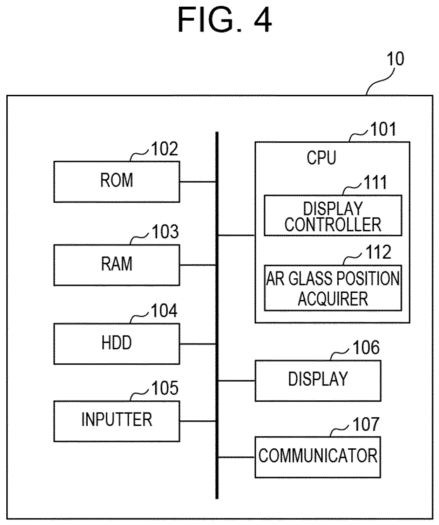

Fig. 4 shows an exemplary configuration of the AR glass 10 according to the present embodiment. The AR glass 10 includes a CPU 101, a ROM 102, a RAM 103, an HDD 104, an inputter 105, a display 106, and a communicator 107, as a hardware configuration. The AR glass 10 may also include an external memory. Also, as a functional configuration, the AR glass 10 includes a display controller 111 and an AR glass position acquirer 112, as functions to be executed by the CPU 101.

Note that, in the present embodiment, an eyeglass-type apparatus that the user 1 can wear is envisioned as the AR glass 10, but the AR glass 10 may be a goggles-type or cap-type device, or a device that is not worn by the user such as a prompter.

A CPU (Central Processing Unit) 101 is constituted by one or more processors and controls the operation of the AR glass 10 in an integrated manner. The CPU 101 may be replaced by one or more processors such as an ASIC (Application-Specific Integrated Circuit), an FPGA (Field Programmable Gate Array), a DSP (Digital Signal Processor), and a GPU (Graphics Processing Unit). The functional configuration of the CPU 101 will be described later.

The ROM (Read Only Memory) 102 is a non-volatile memory that stores control programs and the like necessary for the CPU 101 to execute processing. Note that the programs may be stored in a non-volatile memory such as the HDD (Hard Disk Drive) 104 or an SSD (Solid State Drive) or an external memory such as a removable storage medium (not shown).

The RAM (Random Access Memory) 103 is a volatile memory and functions as a main memory of the CPU 101, a work area, and the like. That is, the CPU 101 loads necessary programs and the like from the ROM 102 to the RAM 103 when executing processing, and realizes various functional operations by executing the programs and the like.

The HDD 104 stores, for example, various types of data, information, and the like necessary for the CPU 101 to perform processing using a program. Also, the HDD 104 stores various types of data, information, and the like obtained by the CPU 101 performing processing using a program or the like, for example. Note that the storage may be performed, either together with or instead of the HDD 10, using a non-volatile memory such as an SSD or an external memory such as a removable storage medium.

The inputter 105 is configured to be able to receive operations made by the user 1. The inputter 105 can receive operations made at another communication apparatus (e.g., smartphone) that is configured to be able to communicate with the AR glass 10, operations made by gesture, or operations made by voice, for example.

The display 106 is a transmissive display through which the background can be seen. The type of the transmissive display is not specifically limited, and may be a transmission type organic EL display, a transmission type inorganic EL display, a transmission type LCD (liquid crystal) display, or the like.

The communicator 107 is an interface for controlling communication between the AR glass 10 and an external apparatus. In the present embodiment, the communicator 107 is configured to communicate with the remote monitoring apparatus 20 and the image processing apparatus 40 using the Internet and a wireless LAN (wireless Local Area Network conforming to the IEEE 802.11 series), for example.

Next, the functional configuration of the CPU 101 of the AR glass 10 will be described.

The display controller 111 performs display control of the display 106. In the present embodiment, the display controller 111 displays, in the display 106, the AR virtual vehicle C4 received from the image processing apparatus 40 via the communicator 107. Note that the display controller 111 may control the display 106 such that, when parallax images (a left eye image and a right eye image that have parallax) are received, the parallax images are displayed in regions for displaying the respective parallax images in the display 106.

The AR glass position acquirer 112 acquires information indicating the position of the AR glass 10 (position information) from a GPS signal received via the communicator 107 or the like. The AR glass position acquirer 112 transmits the acquired position information of the AR glass 10 to the remote monitoring apparatus 20 via the communicator 107.

### Configuration of Remote Monitoring Apparatus 20

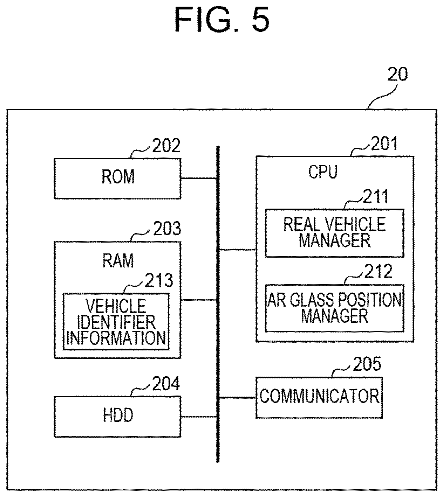

Fig. 5 shows an exemplary configuration of the remote monitoring apparatus 20 according to the present embodiment. The remote monitoring apparatus 20 includes a CPU 201, a ROM 202, a RAM 203, an HDD 204, and a communicator 205, as a hardware configuration. Also, as a functional configuration, the remote monitoring apparatus 20 includes a real vehicle manager 211 and an AR glass position manager 212, as functions to be executed by the CPU 201.

Since the basic configurations of the CPU 201, the ROM 202, the RAM 203, and the HDD 204 are similar to those of the CPU 101, the ROM 102, the RAM 103, and the HDD 104 in Fig. 4, description thereof will be omitted. Note that the RAM 203 stores vehicle identifier information 213. The vehicle identifier information 213 will be described later.

The communicator 205 is an interface for controlling communication between the remote monitoring apparatus 20 and an external apparatus. In the present embodiment, the communicator 205 is configured to communicate with the real vehicle C1, the AR glass 10, and the virtual space provision server 30 using the Internet and a wireless LAN, for example.

Next, the functional configuration of the CPU 201 of the remote monitoring apparatus 20 will be described.

The real vehicle manager 211 monitors the circuit, and acquires information regarding the real vehicle C1 and the AR glass 10 via the communicator 205. For example, the real vehicle manager 211 acquires position information of the real vehicle C1 from the real vehicle C1. As described above, the real vehicle C1 has a function of transmitting (sending) position information of the real vehicle C1 to the remote monitoring apparatus 20, and the real vehicle manager 211 can acquire the position information.

Also, the real vehicle manager 211 specifies (acquires) an identifier of the real vehicle C1 that can be used in the real world and the virtual world in common by referring to the vehicle identifier information 213. For example, when extracting a feature (e.g., shape, size, color) of the real vehicle C1 by monitoring the circuit, the real vehicle manager 211 may acquire an identifier corresponding to the feature from the vehicle identifier information 213 by performing image recognition processing, and specify the acquired identifier as the identifier of the real vehicle C1. Alternatively, when an RFID (Radio Frequency Identification) tag is attached to the real vehicle C1, tag information that can be read from the RFID tag can be used. For example, the real vehicle manager 211 may acquire, from the vehicle identifier information 213, an identifier corresponding to the tag information read out from the RFID tag, by monitoring the circuit, and specify the acquired identifier as the identifier of the real vehicle C1.

The real vehicle manager 211 transmits the acquired position information and identifier of the real vehicle C1 to the virtual space provision server 30 via the communicator 205.

The AR glass position manager 212 acquires position information of the AR glass 10 from the AR glass 10 via the communicator 205, and transmits the acquired position information to the virtual space provision server 30.

The remote monitoring apparatus 20 continuously transmits the position information and identifier of the real vehicle C1 and the position information of the AR glass 10 to the virtual space provision server 30.

### Configuration of Virtual Space Provision Server 30

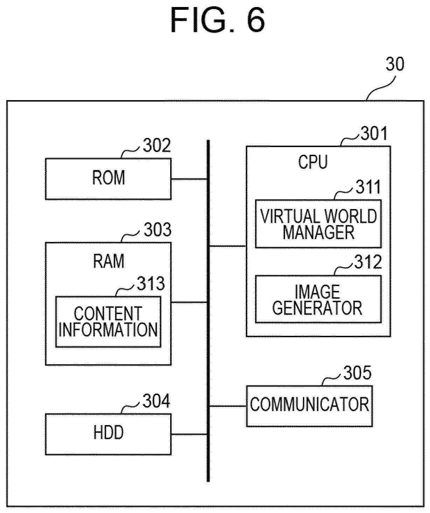

Fig. 6 shows an exemplary configuration of the virtual space provision server 30 according to the present embodiment. The virtual space provision server 30 includes a CPU 301, a ROM 302, a RAM 303, an HDD 304, and a communicator 305, as a hardware configuration. Also, as a functional configuration, the virtual space provision server 30 includes a virtual world manager 311 and an image generator 312, as functions to be executed by the CPU 301. Since the basic configurations of the CPU 301, the ROM 302, the RAM 303, and the HDD 304 are similar to those of the CPU 101, the ROM 102, the RAM 103, and the HDD 104 in Fig. 4, description thereof will be omitted. Note that the RAM 303 stores content information 313. The content information 313 will be described later.

The communicator 305 is an interface for controlling communication between the virtual space provision server 30 and an external apparatus. In the present embodiment, the communicator 305 is configured to communicate with the remote monitoring apparatus 20, the virtual space provision server 30, and the image processing apparatus 40 via communication networks such as the Internet and a wireless LAN, for example.

Next, the functional configuration of the CPU 301 of the virtual space provision server 30 will be described.

The virtual world manager 311 constructs a virtual space, and manages the entirety of a virtual world. For example, the virtual world manager 311 generates a simulated vehicle C3, which is a vehicle in the virtual world corresponding to the real vehicle C1, based on the identifier of the real vehicle C1 that is received from the remote monitoring apparatus 20 via the communicator 305. In the present embodiment, the content information 313 stored in the RAM 303 includes vehicle images corresponding to the identifiers of vehicles. The virtual world manager 311 acquires an image of the simulated vehicle C3 corresponding to the identifier of the real vehicle C1 from the content information 313. The image is an image simulating the shape and design of the real vehicle C1, and is generated and stored in advance.

Then, the virtual world manager 311 moves the simulated vehicle C3 using position information of the real vehicle C1 that is received from the remote monitoring apparatus 20 via the communicator 305.

Also, the virtual world manager 311 moves the virtual vehicle C2 as described above.

The virtual world manager 311 manages objects in the virtual world using identifiers. Specifically, the virtual world manager 311 manages the simulated vehicle C3 using the identifier of the real vehicle C1 that is received from the remote monitoring apparatus 20. Also, the virtual world manager 311 manages the virtual vehicle C2 using a newly generated identifier. Moreover, the virtual world manager 311 manages whether an object in the virtual world is a simulated object or a virtual object. For example, the virtual world manager 311 manages whether an object in the virtual world is a simulated object or a virtual object in association with the identifier. For example, when the virtual vehicle is set to "0" and the simulated vehicle is set to "1", and the identifier of the virtual vehicle C2 is "C2" and the identifier of the simulated vehicle C3 is "C3", the virtual world manager 311 performs management by setting the identifier of the virtual vehicle C2 to "C2-0" and the identifier of the simulated vehicle C3 to "C3-1".

The image generator 312 generates an image seen from a specific virtual position. For example, the image generator 312 specifies a virtual position of the AR glass 10 (position of the AR glass 10 in the virtual world) based on the position information of the AR glass 10 that is received from the remote monitoring apparatus 20 via the communicator 305. Then, the image generator 312 generates (creates) a user viewpoint image (image with the virtual position of the AR glass 10 in the virtual world being the viewpoint) by computer graphics. The image generator 312 may further generates a user viewpoint image using the direction from the position of the AR glass 10 to the position of the real vehicle C1 as the line of sight direction. An example of the user viewpoint image to be generated is the user viewpoint image 300D in Fig. 3D, which is generated such that the positional relationship between the simulated vehicle C3 and the virtual vehicle C2 is visually recognizable. The image generator 312 transmits the generated user viewpoint image to the image processing apparatus 40 via the communicator 305. Note that, as a matter of course, the image generator 312 may also generate images other than user viewpoint images. For example, images seen from various virtual positions may also be generated in order to show the situation in the virtual space. Also, when operations on the virtual vehicle C2 are to be received, an image for showing the user who makes the operations the virtual space may be generated and displayed in a monitor for that purpose (not shown).

Also, the image generator 312 generates meta-information including a region (information regarding coordinates occupied by a vehicle in the user viewpoint image, or the like), an identifier, and information regarding a positional relationship (front and behind relationship) of at least one vehicle included in the user viewpoint image. For example, when the identifiers of the virtual vehicle C2 and the simulated vehicle C3 are set as described above, the meta-information includes the identifier "C2-0" of the virtual vehicle C2 and the region of the virtual vehicle C2 in the user viewpoint image, the identifier "C3-1" of the simulated vehicle C3 and the region of the simulated vehicle C3 in the user viewpoint image, and information regarding the positional relationship between the virtual vehicle C2 and the simulated vehicle C3. The image generator 312 transmits the generated meta-information to the image processing apparatus 40 via the communicator 305.

Note that, in the present embodiment, the functions of the image generator 312 are incorporated in the virtual space provision server 30, but the configuration may be such that an apparatus different from the virtual space provision server 30 has those functions.

### Configuration of Image Processing Apparatus 40

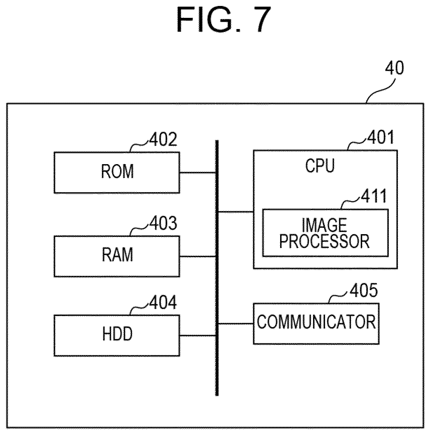

Fig. 7 shows an exemplary configuration of the image processing apparatus 40 according to the present embodiment. The image processing apparatus 40 includes a CPU 401, a ROM 402, a RAM 403, an HDD 404, and a communicator 405, as a hardware configuration. Also, as a functional configuration, the image processing apparatus 40 includes an image processor 411, as a function to be executed by the CPU 401. Since the basic configurations of the CPU 401, the ROM 402, the RAM 403, and the HDD 404 are similar to those of the CPU 101, the ROM 102, the RAM 103, and the HDD 104 in Fig. 4, description thereof will be omitted.

The communicator 405 is an interface for controlling communication between the image processing apparatus 40 and an external apparatus. In the present embodiment, the communicator 405 is configured to communicate with the virtual space provision server 30 and the AR glass 10 via communication networks such as the Internet and a wireless LAN, for example.

Next, the functional configuration of the CPU 401 of the image processing apparatus 40 will be described.

The image processor 411 acquires a user viewpoint image and meta-information from the virtual space provision server 30 via the communicator 405. Then, the image processor 411 generates an AR virtual vehicle C4 from the user viewpoint image based on the user viewpoint image and the meta-information. As described above, the meta-information includes information regarding the regions of the virtual vehicle C2 and the simulated vehicle C3 in the user viewpoint image, and the image processor 411 determines whether or not these regions overlap, and generates the AR virtual vehicle C4 as described below, based on a result of the determination.

When the region of the virtual vehicle C2 does not overlap the region of the simulated vehicle C3 in the user viewpoint image, the image processor 411 generates a full-size virtual vehicle C2 as the AR virtual vehicle C4. That is, the image processor 411 generates an image in which the regions other than the virtual vehicle C2 are deleted (in other words, made transparent) from the user viewpoint image as the AR virtual vehicle C4, based on the information regarding the regions of the virtual vehicle C2 and the simulated vehicle C3 that is included in the meta-information (in this case, the AR virtual vehicle C4 is the same as the virtual vehicle C2).

On the other hand, when the region of the virtual vehicle C2 overlaps the region of the simulated vehicle C3 in the user viewpoint image, the image processor 411 generates an AR virtual vehicle C4 taking the positional relationship between the virtual vehicle C2 and the simulated vehicle C3 that is included in the meta-information, into consideration.

For example, when the positional relationship between the simulated vehicle C3 and the virtual vehicle C2 that is included in the meta-information indicates that the virtual vehicle C2 is located in front and the simulated vehicle C3 is located behind, the image processor 411 generates a full-size image of the virtual vehicle C2 as the AR virtual vehicle C4. That is, the image processor 411 generates an image in which the regions other than the virtual vehicle C2 are deleted from the user viewpoint image as the AR virtual vehicle C4, based on the information regarding the regions of the virtual vehicle C2 and the simulated vehicle C3 that is included in the meta-information (in this case, the AR virtual vehicle C4 is the same as the virtual vehicle C2).

On the other hand, when the positional relationship between the simulated vehicle C3 and the virtual vehicle C2 that is included in the meta-information indicates that the virtual vehicle C2 is located behind and the simulated vehicle C3 is located in front, the image processor 411 generates an image in which the overlapping region (portion) between the virtual vehicle C2 and the simulated vehicle C3 is deleted from the virtual vehicle C2 as the AR virtual vehicle C4. That is, the image processor 411 generates an image in which an overlapping region between the virtual vehicle C2 and the simulated vehicle C3, out of the virtual vehicle C2, is deleted from the user viewpoint image is generated as the AR virtual vehicle C4, based on the information regarding the regions of the virtual vehicle C2 and the simulated vehicle C3 that is included in the meta-information. An example of the AR virtual vehicle C4 in this case is as described above with reference to Figs. 3D and 3E, and is an image in which the overlapping region between the virtual vehicle C2 and the simulated vehicle C3 is deleted from the virtual vehicle C2.

The image processor 411 transmits the generated AR virtual vehicle C4 to the AR glass 10 via the communicator 405.

Note that the AR glass 10, the remote monitoring apparatus 20, the virtual space provision server 30, and the image processing apparatus 40 may have dedicated hardware for executing their respective functions, or may execute some of their functions by hardware and execute the rest with the computer that runs programs. Also, all functions may be performed by computers and programs.

### Processing Flow

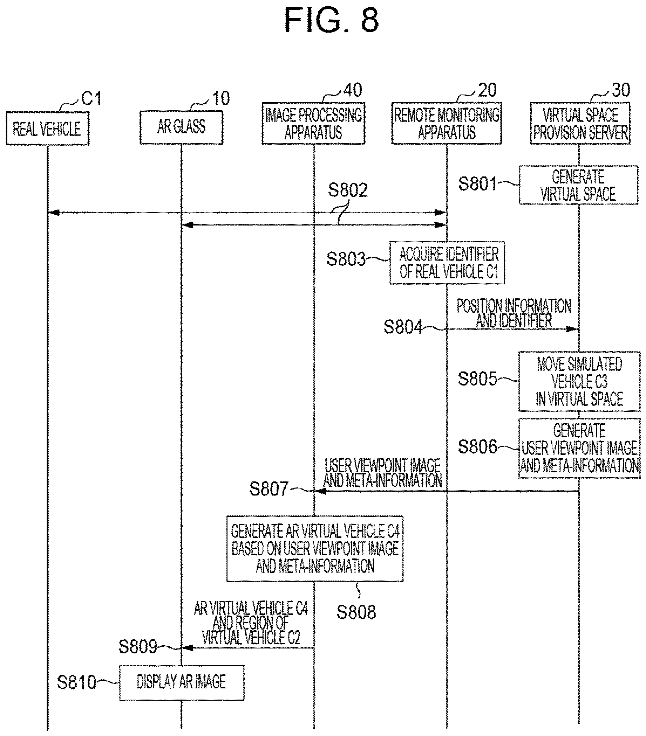

The processing flow according to the present embodiment will be described with reference to Fig. 8. Fig. 8 shows an example of a sequence diagram of communication between a real vehicle C1, the AR glass 10, the remote monitoring apparatus 20, the virtual space provision server 30, and the image processing apparatus 40 according to the present embodiment. Note that the processing sequence is not limited to the sequence shown in Fig. 8.

In this example, the real vehicle C1 that runs on an actual circuit is reproduced as a simulated vehicle C3 in a virtual space. Then, in the virtual space, the simulated vehicle C3 and a virtual vehicle C2 that does not correspond to a real vehicle that runs on the actual circuit are caused to run. Also, the user 1 visually recognizes, at the same time, the real vehicle C1 that runs on the actual circuit and the AR virtual vehicle C4 (corresponding to the virtual vehicle C2) through the AR glass 10.

First, the virtual space provision server 30 generates a virtual space (S801). Virtual objects such as the virtual vehicle C2 are also generated.

The remote monitoring apparatus 20 monitors the circuit (S802). Here, the remote monitoring apparatus 20 may extract features (e.g., shape, size, color) of the real vehicle C1. Alternatively, or additionally, the remote monitoring apparatus 20 may acquire tag information of an RFID tag attached to the real vehicle C1.

Also, while monitoring the circuit (S802), the remote monitoring apparatus 20 acquires position information of the real vehicle C1 transmitted by the real vehicle C1 and position information of the AR glass 10 transmitted by the AR glass 10.

Based on the information obtained by monitoring the circuit (S802), the remote monitoring apparatus 20 acquires an identifier of the real vehicle C1 (S803). For example, the remote monitoring apparatus 20 can acquire the identifier of the real vehicle C1 based on the features of the real vehicle C1 and the tag information that are obtained by monitoring the circuit in step S802.

The remote monitoring apparatus 20 transmits the position information and the identifier of the real vehicle C1 and the position information of the AR glass 10 to the virtual space provision server 30 (S804). The processing in steps S802 to S804 are successively performed.

The virtual space provision server 30 generates, in the virtual space, a simulated vehicle C3 that corresponds to the real vehicle C1 and is a vehicle in the virtual world, based on the identifier of the real vehicle C1 received from the remote monitoring apparatus 20. Then, the virtual space provision server 30 moves, in the virtual space, the simulated vehicle C3 using the position information of the real vehicle C1 received from the remote monitoring apparatus 20 (S805).

Also, the virtual space provision server 30 generates a user viewpoint image (image with the virtual position of the AR glass 10 in the virtual world being the viewpoint) by computer graphics based on the position information of the AR glass 10 received from the remote monitoring apparatus 20 (S806).

Moreover, the virtual space provision server 30 generates meta-information including information regarding the regions (positions) and identifiers of one or more vehicles included in the user viewpoint image (S806). In this example, the meta-information includes an identifier of the virtual vehicle C2, an identifier of the simulated vehicle C3, regions of the virtual vehicle C2 and the simulated vehicle C3 in the user viewpoint image, and information regarding the positional relationship (front and behind relationship) between the two vehicles.

The virtual space provision server 30 transmits the generated user viewpoint image and meta-information to the image processing apparatus 40 (S807).

The image processing apparatus 40 generates an AR virtual vehicle C4 based on the user viewpoint image and the meta-information that are received from the virtual space provision server 30 (S808). As described above, the meta-information includes regions of the virtual vehicle C2 and simulated vehicle C3 in the user viewpoint image and information regarding the positional relationship between the two vehicles. The image processing apparatus 40 determines whether or not the two regions overlap, and if the two regions overlap, generates the AR virtual vehicle C4 considering the positional relationship between the two vehicles.

For example, when the region of the virtual vehicle C2 overlaps the region of the simulated vehicle C3, and the positional relationship between the two vehicles are such that the simulated vehicle C3 is located in front and the virtual vehicle C2 is located behind, as in the user viewpoint image 300D in Fig. 3D, the image processing apparatus 40 generates the AR virtual vehicle C4 as in the case of the image 300E in Fig. 3E. That is, the image processing apparatus 40 generates an image in which the region that overlaps the simulated vehicle C3 is deleted from the virtual vehicle C2 as the AR virtual vehicle C4.

In the present embodiment, it is regarded that a real object in the real world matches a simulated object in a user viewpoint image generated by the virtual space provision server 30. For example, it is regarded that the simulated vehicle C3 in the user viewpoint image 300D matches the real vehicle C1 viewed by the user in terms of the position (and shape). Therefore, as a result of adjusting the displayed portion of the AR virtual vehicle C4 according to the front and behind relationship between the virtual vehicle C2 and the simulated vehicle C3 in the user viewpoint image 300D, the AR virtual vehicle C4 that is visually recognized through the AR glass 10 can be extracted.

Note that, in the present disclosure, it is assumed that the term "match" has the similar meaning as "approximately match" (e.g., the matching degree is in a predetermined range).

The image processing apparatus 40 transmits the generated AR virtual vehicle C4 and the information regarding the region of the virtual vehicle C2 included in the meta-information (information regarding the coordinates occupied by the virtual vehicle C2 in the user viewpoint image, and the like) to the AR glass 10 (S809).

The AR glass 10 receives information regarding the region of the virtual vehicle C2 included in the meta-information (information regarding the coordinates occupied by the virtual vehicle C2 in the user viewpoint image), along with the AR virtual vehicle C4, from the image processing apparatus 40. Then, the AR glass 10 displays the AR virtual vehicle C4 in the region, in the display 106, that is indicated by the information (S810). Accordingly, the user 1 can see the real vehicle C1 and the virtual vehicle C2 that are in a natural positional relationship. For example, as shown in Fig. 3C, even when the virtual vehicle C2 (corresponding to the AR virtual vehicle C4) is located behind the real vehicle C1, the virtual vehicle C2 can be seen with a natural positional relationship relative to the real vehicle C1.

As described above, the image processing apparatus 40 according to the present embodiment generates an AR virtual vehicle C4 to be displayed in the AR glass 10 from the virtual vehicle C2 in an image viewed by the user 1 in the virtual world (user viewpoint image), based on the regions of the virtual vehicle C2 and the simulated vehicle C3 and the positional relationship therebetween. The AR glass 10 displays the AR virtual vehicle C4 in an appropriate region of the display. The AR virtual vehicle C4 has only the portions that can be seen from the user 1, and therefore the front and behind relationship between the virtual vehicle C2 and the simulated vehicle C3 in the user viewpoint image matches the front and behind relationship between the virtual vehicle C2 and the real vehicle C1 that are viewed through the AR glass 10. Accordingly, the sense of discomfort felt by the user 1 can be reduced. That is, the user 1 in the real world can view an AR image in a more realistic display mode.

Note that, in the present embodiment, a case where a plurality of vehicles move in the real world and the virtual world has been described, but the objects to be moved in the real world and the virtual world are not limited to the vehicles, as described above. The present embodiment can be applied to any dynamic objects or static objects of which the front and behind relationship may change in the real world and the virtual world.

### Second Embodiment

In the first embodiment, the virtual space provision server 30 generates, as an image with the virtual position of the user 1 (position of the user 1 in the virtual world) being the viewpoint, an image with the virtual position of the AR glass 10 (position of the AR glass 10 in the virtual world) being the viewpoint as a user viewpoint image. However, the two viewpoints do not always match depending on the orientation and posture of the user 1. That is, the user 1 wearing the AR glass 10 can change the height, orientation, or posture, and the viewpoint of the user 1 at a virtual position may change accordingly. That is, the deviation of the user viewpoint image generated by the virtual space provision server 30 from the real world image viewed by the user may be large enough to be recognized.

When this deviation is large, an AR image in which some region of the virtual object is deleted may result in an unnatural sight. Fig. 3F shows an example of the unnatural user sight. With a user sight 300F in Fig. 3F, it can be recognized that a portion of the AR virtual vehicle C4 lacks, and a scene is realized that gives a sense of discomfort to the user.

Therefore, in the present embodiment, a configuration is adopted in which an AR glass 10 worn by a user 1 performs imaging processing, the user viewpoint image is modified based on a real world image (real image) obtained by the imaging processing, and the AR virtual vehicle is generated from the modified user viewpoint image. In the following, the differences from the first embodiment will be described, and the description of the portions in common will be omitted.

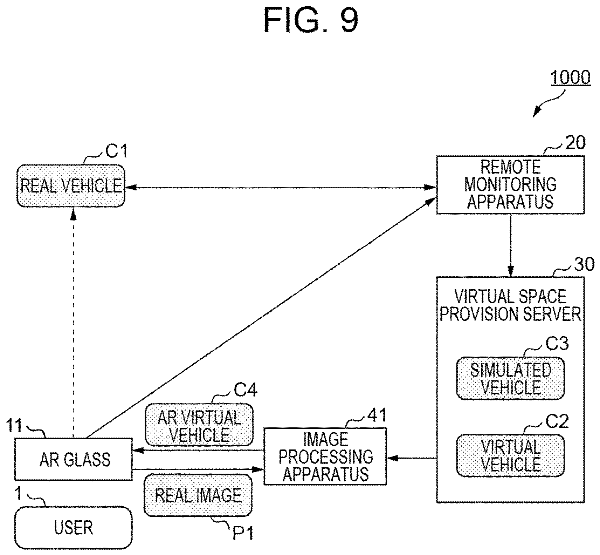

Fig. 9 shows an exemplary configuration of an augmented reality system 1000 according to the present embodiment. The augmented reality system 1000 according to the present embodiment differs from the augmented reality system 100 in Fig. 1 in that the configurations of an AR glass 11 and an image processing apparatus 41 differ. The AR glass 11 may transmit a real image P1 to the image processing apparatus 41.

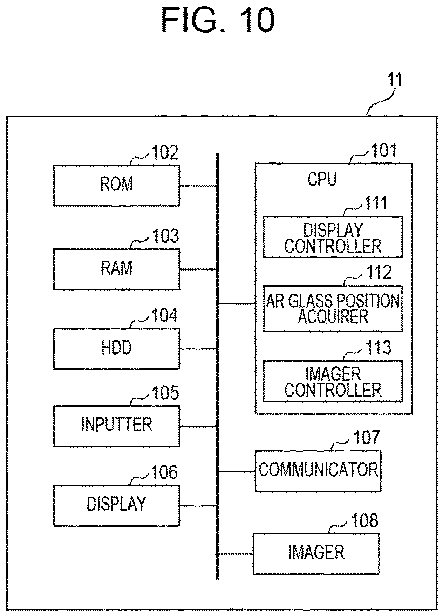

Fig. 10 shows an exemplary configuration of the AR glass 11 according to the present embodiment. As differences in the configuration from the AR glass 10 shown in Fig. 4, the AR glass 11 further includes an imager 108 and an imager controller 113.

The imager 108 recognizes the real world that the user 1 views, performs imaging processing, and generates a real world image. The imager 108 is disposed at a position where a world viewed by the user 1 wearing the AR glass 11 can be reproduced. Note that the AR glass 11 may include a plurality of imagers 108.

The imager controller 113 controls the imaging processing performed by the imager 108. The imager controller 113 may control the imager 108 according to the operation made by the user 1 or a predetermined setting. Also, the imager controller 113 may transmit a user sight (e.g., real image P1) generated by the imager 108 to the image processing apparatus 41 via a communicator 107.

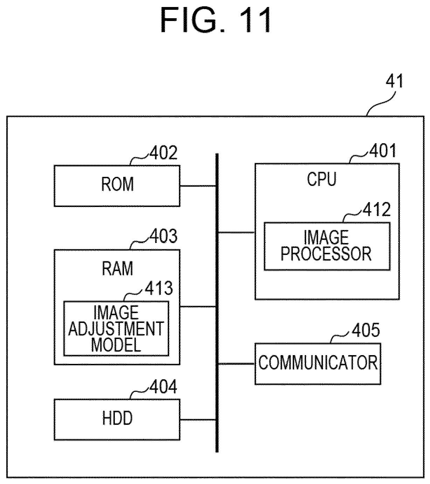

Fig. 11 shows an exemplary configuration of the image processing apparatus 41 according to the present embodiment. The image processing apparatus 41 includes, as a difference in the configuration from the image processing apparatus 40 shown in Fig. 7, an image processor 412, as a function to be executed by a CPU 401. Also, a RAM 403 stores an image adjustment model 413. Note that the image adjustment model 413 may also be stored in a ROM 402. The image adjustment model 413 is a learning model for deep learning that is configured to receive a user viewpoint image generated by the virtual space provision server 30 and a real image P1 obtained by the AR glass 11 as inputs, and estimate and output an adjusted user viewpoint image that is obtained by adjusting (modifying) the orientation and/or size of the user viewpoint image. The image adjustment model 413 has been subjected to learning in advance, and is stored in the RAM 403 (or the ROM 402).

In the present embodiment, it is assumed that the deviation of the user viewpoint image generated by the virtual space provision server 30 from the real image P1 obtained by the AR glass 11 is in a recognizable degree, but is not large too much. In other words, the same object is displayed in the user viewpoint image and the real image P1, and the position, orientation, size, or the like of the object may minutely differ between the two images. Therefore, the image adjustment model 413 modifies the position, orientation, and/or size of the object in the input user viewpoint image such that the object appearing in the user viewpoint image matches the object appearing in the real image P1. The modification is performed using the image adjustment model 413 that has been created by deep learning. The model is for recognizing a target object that is displayed in two input images and performing modification on one image such that the target object in the one image matches the object in the other image. A known model may be used as the model.

The image processor 412 inputs the user viewpoint image received from the virtual space provision server 30 and the real image P1 received from the AR glass 11 to the image adjustment model 413, and acquires an adjusted user viewpoint image. Furthermore, the image processor 412 according to the present embodiment generates an AR virtual vehicle from the adjusted user viewpoint image using a procedure similar to the procedure described in the first embodiment.

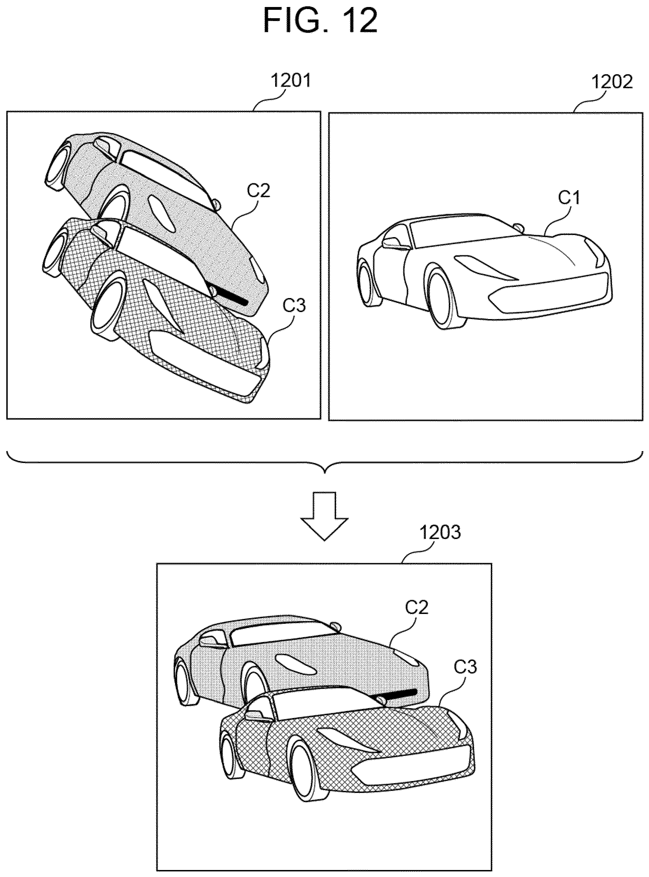

The outline of the procedure for generating an adjusted user viewpoint image according to the present embodiment will be described with reference to Fig. 12. Fig. 12 is a diagram for describing a procedure for generating an adjusted user viewpoint image according to the present embodiment. A user viewpoint image 1201 is a user viewpoint image generated by an image generator 312 of the virtual space provision server 30, and includes a virtual vehicle C2 and a simulated vehicle C3. Also, a real image 1202 is a real image generated by the imager 108 of the AR glass 11 worn by the user 1, and includes a real vehicle C1. The image adjustment model 413 receives the user viewpoint image 1201 and the real image 1202 as inputs, and determines that the real vehicle C1 and the simulated vehicle C3 are in a correspondence relationship from information regarding matching in color or shape and/or the identifiers. Then, the image adjustment model 413 modifies the position, orientation, and/or size of the user viewpoint image 1201 such that the simulated vehicle C3 matches the real vehicle C1 with the real vehicle C1 being the reference, and outputs an adjusted user viewpoint image 1203. Accordingly, the deviation between the adjusted user viewpoint image 1203 and the real world image viewed by the user decreases.

### Processing Flow

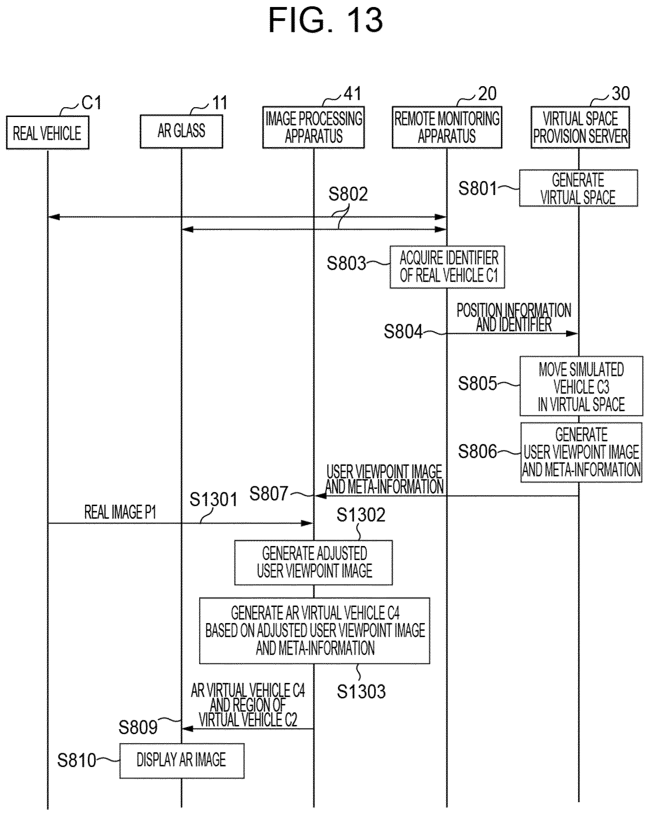

The processing flow according to the present embodiment will be described with reference to Fig. 13. Fig. 13 shows an example of a sequence diagram of communication between a real vehicle C1, the AR glass 11, the remote monitoring apparatus 20, the virtual space provision server 30, and the image processing apparatus 41 according to the present embodiment. Note that the processing sequence is not limited to the sequence shown in Fig. 13. The processing steps similar to those shown in Fig. 8 are denoted by the same reference numerals, and description thereof is omitted.

The image processing apparatus 41 receives a user viewpoint image and meta-information from the virtual space provision server 30 (S807), and receives a real image P1 from the AR glass 11 (S1301). The image processing apparatus 41 inputs the user viewpoint image and the real image P1 to the image adjustment model 413, and generates an adjusted user viewpoint image (S1302). Next, the image processing apparatus 41 generates an AR virtual vehicle C4 based on the adjusted user viewpoint image and the meta-information (S1303).

As a result of such processing, even if the height, orientation, or posture of the user 1 wearing the AR glass 11 changes, and the real image no longer matches the user viewpoint image, the image processing apparatus 41 generates an adjusted user viewpoint image, and generates an AR virtual vehicle based on the adjusted user viewpoint image.

Note that, in the present embodiment, the image processing apparatus 41 generates an adjusted user viewpoint image with the real vehicle C1 being the reference, but may also generate the adjusted user viewpoint image with any desired object such as a static object (e.g., road or sign) being the reference.

As described above, according to the present embodiment, an AR virtual vehicle is generated based on an adjusted user viewpoint image that is generated according to the change in height, orientation, or posture of the user 1 wearing the AR glass 11, and an AR image is generated using the generated AR virtual vehicle. Accordingly, an AR image is displayed in the AR glass 11 in a mode in which the user 1 feels less sense of discomfort, and the user 1 in the real world can enjoy a more realistic display mode.

Note that, in the present embodiment, description has been given regarding the AR image generation when a plurality of vehicles move in the real world and the virtual world, but the objects to be moved in the real world and the virtual world are not limited to the vehicles, as described above. The present embodiment can be applied to any dynamic objects or static objects between which the front and behind relationship may change in the real world and the virtual world.

Note that although specific embodiments have been described above, the embodiments are merely examples and are not intended to limit the scope of the present disclosure. The apparatuses and methods described in the present specification can be embodied in modes other than those described above. Also, omissions, substitutions, and modifications may be made as appropriate to the above-described embodiments without departing from the scope of the present disclosure. Such omissions, substitutions, and modifications are included in the scope of the claims and their equivalents, and fall within the technical scope of the present disclosure.

### Embodiments of the Present Disclosure

The present disclosure includes the following embodiments.
[1] An augmented reality system including one or more processors, in which at least one of the one or more processors executes: first generation processing for generating a virtual viewpoint image from a designated position in a virtual world; determination processing for determining whether or not, in the virtual viewpoint image, a simulated object in the virtual world that corresponds to a real object in a real world overlaps a virtual object that is present in the virtual world and is different from the simulated object; second generation processing for generating, in a case where it is determined that the simulated object overlaps the virtual object in the virtual viewpoint image, an AR (augmented reality) object for an AR image that corresponds to the virtual object according to a positional relationship between the simulated object and the virtual object in the virtual viewpoint image; and display processing for displaying the AR object in a transmissive display.
[2] The augmented reality system according to [1], in which the second generation processing includes generating, in a case where the simulated object is located in front and the virtual object is located behind in the virtual viewpoint image, the AR object in which an overlapping region between the simulated object and the virtual object is deleted from the virtual object.
[3] The augmented reality system according to [1] or [2], in which at least one of the one or more processors further executes third generation processing for generating an adjusted virtual viewpoint image by adjusting the virtual viewpoint image using a real image captured by a user apparatus, the determination processing includes determining whether or not the simulated object overlaps the virtual object in the adjusted virtual viewpoint image, and the second generation processing includes generating, in a case where it is determined that the simulated object overlaps the virtual object in the adjusted virtual viewpoint image, the AR object according to a positional relationship between the simulated object and the virtual object in the adjusted virtual viewpoint image.
[4] The augmented reality system according to [3], in which, in the third generation processing, ae deviation between the virtual object appearing in the adjusted virtual viewpoint image and an object corresponding to the virtual object appearing in the real image is less than a deviation between the virtual object appearing in the virtual viewpoint image and the object corresponding to the virtual object appearing in the real image.
[5] The augmented reality system according to any one of [1] to [4], in which the real object is a vehicle that runs in the real world, and the virtual object is an object that simulates a vehicle that runs in the virtual world.
[6] An image processing apparatus including one or more processors, in which at least one of the one or more processors executes: determination processing for determining, in a virtual viewpoint image from a designated position in a virtual world, whether or not a simulated object in the virtual world that corresponds to a real object in a real world overlaps a virtual object that is present in the virtual world and is different from the simulated object, and generation processing for generating, in a case where it is determined that the simulated object overlaps the virtual object in the virtual viewpoint image, an AR (augmented reality) object for an AR image that corresponds to the virtual object according to a positional relationship between the simulated object and the virtual object in the virtual viewpoint image.
[7] The image processing apparatus according to [6], in which the generation processing is for generating, in a case where the simulated object is located in front and the virtual object is located behind in the virtual viewpoint image, the AR object in which an overlapping region between the simulated object and the virtual object is deleted from the virtual object.
[8] The image processing apparatus according to [6] or [7], in which at least one of the one or more processors further executes adjustment processing for generating an adjusted virtual viewpoint image by adjusting the virtual viewpoint image using a real image captured by a user apparatus, the determination processing includes determining whether or not the simulated object overlaps the virtual object in the adjusted virtual viewpoint image, and the generation processing includes generating, in a case where it is determined that the simulated object overlaps the virtual object in the adjusted virtual viewpoint image, the AR object according to a positional relationship between the simulated object and the virtual object in the adjusted virtual viewpoint image.
[9] The image processing apparatus according to [8], in which, in the adjustment processing, a deviation between the virtual object appearing in the adjusted virtual viewpoint image and an object corresponding to the virtual object appearing in the real image is less than a deviation between the virtual object appearing in the virtual viewpoint image and the object corresponding to the virtual object appearing in the real image.
[10] An image processing method including: determining, in a virtual viewpoint image from a designated position in a virtual world, whether or not a simulated object in the virtual world that corresponds to a real object in a real world overlaps a virtual object that is present in the virtual world and is different from the simulated object; and generating, in a case where it is determined that the simulated object overlaps the virtual object in the virtual viewpoint image, an AR (augmented reality) object for an AR image that corresponds to the virtual object according to a positional relationship between the simulated object and the virtual object in the virtual viewpoint image.
[11] A computer-readable storage medium storing a program, the program including commands for, when executed by one or more processors of an image processing apparatus, causing the image processing apparatus to execute: determination processing for determining, in a virtual viewpoint image from a designated position in a virtual world, whether or not a simulated object in the virtual world that corresponds to a real object in a real world overlaps a virtual object that is present in the virtual world and is different from the simulated object, and generation processing for, in a case where it is determined that the simulated object overlaps the virtual object in the virtual viewpoint image, generating an AR (augmented reality) object for an AR image that corresponds to the virtual object according to a positional relationship between the simulated object and the virtual object in the virtual viewpoint image.

### REFERENCE NUMERALS AND SYMBOLS

- 1:: User
- 10; 11:: AR glass
- 20:: Remote monitoring apparatus
- 30:: Virtual space provision server
- 40, 41:: Image processing apparatus
- 101:: CPU
- 102:: ROM
- 103:: RAM
- 104:: HDD
- 105:: Inputter
- 106:: Display
- 107:: Communicator
- 108:: Imager
- 111:: Display controller
- 112:: AR glass position acquirer
- 113:: Imager controller
- 201:: CPU
- 202:: ROM
- 203:: RAM
- 204:: HDD
- 205:: Communicator
- 211:: Real vehicle manager
- 212:: AR glass position manager
- 213:: Vehicle identifier information
- 301:: CPU
- 302:: ROM
- 303:: RAM
- 304:: HDD
- 305:: Communicator
- 311:: Virtual world manager
- 312:: Image generator
- 313:: Content information
- 401:: CPU
- 402:: ROM
- 403:: RAM
- 404:: HDD
- 405:: Communicator
- 411, 412:: Image processor
- 413:: Image adjustment model

## Claims

1. An augmented reality system comprising
one or more processors,
wherein at least one of the one or more processors executes:
first generation processing for generating a virtual viewpoint image from a designated position in a virtual world;
determination processing for determining whether or not, in the virtual viewpoint image, a simulated object in the virtual world that corresponds to a real object in a real world overlaps a virtual object that is present in the virtual world and is different from the simulated object;
second generation processing for generating, in a case where it is determined that the simulated object overlaps the virtual object in the virtual viewpoint image, an AR (augmented reality) object for an AR image that corresponds to the virtual object according to a positional relationship between the simulated object and the virtual object in the virtual viewpoint image; and
display processing for displaying the AR object in a transmissive display.

2. The augmented reality system according to claim 1,
wherein the second generation processing includes
generating, in a case where the simulated object is located in front and the virtual object is located behind in the virtual viewpoint image, the AR object in which an overlapping region between the simulated object and the virtual object is deleted from the virtual object.

3. The augmented reality system according to claim 1,
wherein at least one of the one or more processors further executes
third generation processing for generating an adjusted virtual viewpoint image by adjusting the virtual viewpoint image using a real image captured by a user apparatus,
the determination processing includes determining whether or not the simulated object overlaps the virtual object in the adjusted virtual viewpoint image, and
the second generation processing includes generating, in a case where it is determined that the simulated object overlaps the virtual object in the adjusted virtual viewpoint image, the AR object according to a positional relationship between the simulated object and the virtual object in the adjusted virtual viewpoint image.

4. The augmented reality system according to claim 3,
wherein, in the third generation processing, a deviation between the virtual object appearing in the adjusted virtual viewpoint image and an object corresponding to the virtual object appearing in the real image is less than a deviation between the virtual object appearing in the virtual viewpoint image and the object corresponding to the virtual object appearing in the real image.

5. The augmented reality system according to claim 1,
wherein the real object is a vehicle that runs in the real world, and
the virtual object is an object that simulates a vehicle that runs in the virtual world.

6. An image processing apparatus comprising
one or more processors,
wherein at least one of the one or more processors executes:
determination processing for determining, in a virtual viewpoint image from a designated position in a virtual world, whether or not a simulated object in the virtual world that corresponds to a real object in a real world overlaps a virtual object that is present in the virtual world and is different from the simulated object, and
generation processing for generating, in a case where it is determined that the simulated object overlaps the virtual object in the virtual viewpoint image, an AR (augmented reality) object for an AR image that corresponds to the virtual object according to a positional relationship between the simulated object and the virtual object in the virtual viewpoint image.

7. The image processing apparatus according to claim 6,
wherein the generation processing is for generating, in a case where the simulated object is located in front and the virtual object is located behind in the virtual viewpoint image, the AR object in which an overlapping region between the simulated object and the virtual object is deleted from the virtual object.

8. The image processing apparatus according to claim 6,
wherein at least one of the one or more processors further executes
adjustment processing for generating an adjusted virtual viewpoint image by adjusting the virtual viewpoint image using a real image captured by a user apparatus,
the determination processing includes determining whether or not the simulated object overlaps the virtual object in the adjusted virtual viewpoint image, and
the generation processing includes generating, in a case where it is determined that the simulated object overlaps the virtual object in the adjusted virtual viewpoint image, the AR object according to a positional relationship between the simulated object and the virtual object in the adjusted virtual viewpoint image.

9. The image processing apparatus according to claim 8,
wherein, in the adjustment processing, a deviation between the virtual object appearing in the adjusted virtual viewpoint image and an object corresponding to the virtual object appearing in the real image is less than a deviation between the virtual object appearing in the virtual viewpoint image and the object corresponding to the virtual object appearing in the real image.

10. An image processing method comprising:
determining, in a virtual viewpoint image from a designated position in a virtual world, whether or not a simulated object in the virtual world that corresponds to a real object in a real world overlaps a virtual object that is present in the virtual world and is different from the simulated object; and
generating, in a case where it is determined that the simulated object overlaps the virtual object in the virtual viewpoint image, an AR (augmented reality) object for an AR image that corresponds to the virtual object according to a positional relationship between the simulated object and the virtual object in the virtual viewpoint image.
